# EUROPÄISCHE PATENTSCHRIFT

(11) **EP 2 985 244 B1**
(45) Veröffentlichungstag und Bekanntmachung des Hinweises auf die Patenterteilung: **10.04.2019**
(21) Anmeldenummer: 15175691.3
(22) Anmeldetag: 07.07.2015
(51) Int. Cl.: B65G 27/32, G05D 7/06, G05D 19/02

(54) **SCHWINGFÖRDERER UND VERFAHREN ZUM BETRIEB EINES SCHWINGFÖRDERERS**
VIBRATORY CONVEYOR AND METHOD FOR OPERATING A VIBRATOR CONVEYOR
CONVOYEUR OSCILLANT ET PROCÉDÉ D'EXPLOITATION D'UN CONVOYEUR OSCILLANT

(30) Priorität: 06.08.2014 DE 102014111166
(43) Veröffentlichungstag der Anmeldung: 17.02.2016
(73) Patentinhaber: Afag Holding AG, 6052 Hergiswil (CH)
(72) Erfinder: BOTT, Klaus, 90518 Altdorf (DE); MESAN, Izudin, 90439 Nürnberg (DE); MOJRZISCH, Sebastian, 30449 Hannover (DE); TWIEFEL, Jens, 30159 Hannover (DE); WALLASCHECK, Jörg, 30161 Hannover (DE)
(74) Vertreter: Lindner Blaumeier Patent- und Rechtsanwälte

(56) Entgegenhaltungen:
- DE-A1- 19 531 674
- DE-T2- 69 407 219
- US-A- 5 777 232

## Beschreibung

Die Erfindung betrifft einen Schwingförderer, umfassend eine Schwingschiene, wenigstens einen Elektromagneten mit einer Spule und einen mit der Schwingschiene gekoppelten Anker, der durch eine Ansteuerung der Spule zur Erzeugung einer Schwingung der Schwingschiene bewegbar ist, wobei die Spule Teil einer Oszillatorschaltung ist, wobei eine Oszillatorfrequenz eines Oszillatorsignals der Oszillatorschaltung von einer durch eine Position des Ankers bezüglich der Spule beeinflussten Induktivität der Spule abhängt.

Schwingförderer werden zum Transport von Material entlang von Schienen, beispielsweise zur Zuführung von kleinen Bauteilen bzw. von Bauteilkomponenten in automatisierten Fertigungsprozessen eingesetzt. Durch eine ellipsenartige Rüttelbewegung wird das zu fördernde Material entlang einer vordefinierten Bahn geführt. Die ellipsenförmige Rüttelbewegung wird mittels wenigstens eines Elektromagneten erzeugt. Der Elektromagnet zieht einen mit der Schwingschiene des Schwingförderers verbundenen Anker periodisch an, wobei auf die Schwingschiene und somit auf den Anker eine durch eine Elastizität, typischerweise durch Blattfedern, vorgegebene Rückstellkraft wirkt.

Die Größe der Schwingungsamplitude steht im Zusammenhang zur Förderleistung, weshalb eine möglichst große Schwingungsamplitude erreicht werden soll. Um dies bei geringem Energieeintrag zu erreichen soll der Schwingförderer nahe seiner Resonanzfrequenz betrieben werden. Problematisch ist hierbei, dass die Schwingung des Schwingförderers aufgrund seines Aufbaus typischerweise nicht linear ist, womit bereits geringe Abweichungen von der Resonanzfrequenz zu starken Änderungen der Schwingungsamplitude bzw. zu einem Zusammenbrechen der Schwingung führen können.

Um einen Schwingförderer nahe an seiner Resonanzfrequenz anzuregen, schlägt die Druckschrift DE 195 31 674 vor, eine im Takt der Vibration schwankende Induktivität einer Antriebsspule des Schwingförderers auszuwerten, um dieser Antriebspulse mit der Eigenfrequenz des Förderers zuzuführen. Hierzu wird ein digitaler Zähler, der mit fester Frequenz erhöht wird, mit einer Taktung ausgelesen, die durch einen Schwingkreis vorgegeben wird, der die Antriebsspule als frequenzbestimmendes Element umfasst. Der ausgelesene Zählerstand schwankt somit im Takt der mechanischen Vibrationen des Förderers, so dass durch eine Zentraleinheit ein günstigster Zeitpunkt für einen Antriebsimpuls berechnet werden kann.

Der Erfindung liegt die Aufgabe zugrunde, einen Schwingförderer anzugeben, der mit geringem Schaltungsaufwand zuverlässig nahe der und/oder mit der Resonanzfrequenz des Schwingförderers angetrieben werden kann.

Die Aufgabe wird erfindungsgemäß durch einen Schwingförderer der eingangs genannten Art gelöst, wobei der Schwingförderer eine Rückkoppelschaltung umfasst, die die Spule mit einem einen zeitlichen Verlauf einer Frequenzänderung der Oszillatorfrequenz abbildenden Steuersignal ansteuert.

Erfindungsgemäß wird vorgeschlagen statt einer Fremdanregung des Schwingförderers, bei der der Schwingförderer durch ein Zuführen einer vorgegebenen Schwingung oder von vorgegebenen Strompulsen zur Spule angetrieben wird, eine Selbstanregung zu nutzen. Die Ansteuerung der Spule des Schwingförderers erfolgt durch ein Signal, das aus der Schwingung des Schwingförderers selbst abgeleitet wird. Hierbei wird ausgenutzt, dass die Induktivität der Spule von der Position des Ankers bezüglich der Spule abhängt. Eine Spule eines Schwingförderers kann insbesondere auf ein Joch aufgebracht sein, das die magnetischen Feldlinien der Spule bündelt. In Abhängigkeit der Größe des Luftspalts zwischen dem Joch und dem Anker ändert sich die Induktivität der Spule.

Wird eine Oszillatorschaltung vorgesehen, die die Spule, insbesondere als ein Element eines Schwingkreises der Oszillatorschaltung, umfasst, so hängt die Oszillatorfrequenz des Oszillatorsignals des Oszillators von dem Abstand zwischen Anker und Spule ab. Ist der Abstand zwischen dem Anker und der Spule gering, so weist die Spule eine große Induktivität auf, was bei einer Nutzung in einem Schwingkreis zu einer geringen Resonanzfrequenz des Schwingkreises und somit zu einer geringen Oszillatorfrequenz führt. Mit zunehmendem Abstand zwischen dem Anker und der Spule wird die Oszillatorschaltung zu höheren Frequenzen hin verstimmt. Der Zusammenhang zwischen der Oszillatorfrequenz und einem Abstand zwischen dem Anker und der Spule ist somit streng monoton, womit eine Frequenzänderung der Oszillatorfrequenz näherungsweise als Ortssignal des Ankers aufgefasst werden kann. Der Verlauf einer Frequenzänderung der Oszillatorfrequenz entspricht somit einem "verzerrten" Verlauf des Abstands zwischen Anker und Spule. Durch eine Rückkopplung dieses Signals bei Wahl einer entsprechenden Phasenlage kann der Schwingförderer nahe an der Resonanzfrequenz betrieben werden. Da die Schwingung in diesem Fall selbst anregt ist, ist die Amplitude der Schwingung stabil.

Die Rückkoppelschaltung kann eine Demodulationsschaltung zur Frequenz-Demodulation umfassen, die ausgebildet ist, aus dem Oszillatorsignal das Steuersignal oder ein Messsignal, in Abhängigkeit dessen das Steuersignal bereitgestellt wird, zu generieren. Das Oszillatorsignal weist aufgrund der Schwingung des Schwingförderers und somit aufgrund der Bewegung des Ankers bezüglich der Spule eine zeitlich veränderliche Oszillatorfrequenz auf. Das Oszillatorsignal kann somit als ein Signal mit einer Trägerfrequenz interpretiert werden, das durch ein Modulationssignal frequenzmoduliert wird. Durch eine Demodulationsschaltung ist es möglich, das Modulationssignal, also den zeitlichen Verlauf der Frequenzänderung der Oszillatorfrequenz, zurückgewinnen.

Alternativ wäre es bei einem ausreichenden Frequenzabstand zwischen der Schwingungsfrequenz des Schwingförderers und der Oszillatorfrequenz auch möglich, direkt Periodendauern des Oszillatorsignals zu messen und aus diesen den zeitlichen Verlauf einer Frequenzänderung der Oszillatorfrequenz zu bestimmen. Zur Messung einer Periodendauer können beispielsweise digitale Zähler oder analoge Integratoren genutzt werden, die bei einer bestimmten Flanke und/oder bei einem bestimmten Wert des Oszillatorsignals zurückgesetzt werden.

Die Demodulationsschaltung kann insbesondere einen phasenstarren Regelkreis umfassen. Der phasenstarre Regelkreis kann einen spannungsgesteuerten Oszillator und einen Phasendetektor umfassen, wobei der Phasendetektor eine relative Phasenlage zwischen dem spannungsgesteuerten internen Oszillator und dem zugeführten Oszillatorsignal ermittelt. Ein Phasendetektor kann derart ausgebildet sein, dass das zugeführte Oszillatorsignal und das Signal des internen Oszillators, beispielsweise durch Sättigung, in Signale mit genau zwei möglichen Werten gewandelt werden und die beiden Signale mit einem XOR-Gatter verknüpft werden. Im Stand der Technik sind zahlreiche weitere Phasendetektoren bekannt.

Das Ausgangssignal des Phasendetektors kann einem Schleifenfilter mit einer vorgegebenen Grenzfrequenz zugeführt werden. Das Ausgangssignal des Schleifenfilters kann als Steuerspannung an den spannungsgesteuerten Oszillator zurückgeführt werden. Wird ein spannungsgesteuerter Oszillator mit einer linearen Frequenzsteuerung genutzt, so entspricht das Ausgangssignal des Schleifenfilters, also die Steuerspannung des Oszillators, abgesehen von einem konstanten Offset, im Wesentlichen dem zeitlichen Verlauf einer Frequenzänderung des Eingangssignals. Durch einen phasenstarren Regelkreis, dem als Eingangssignal das Oszillatorsignal zugeführt wird, wird als Ausgangssignal somit ein Signal bereitgestellt, das einen zeitlichen Verlauf einer Frequenzänderung der Oszillatorfrequenz abbildet. Ein vorhandener Offset des Ausgangssignals kann beispielsweise durch einen Gleichspannungsfilter entfernt werden und/oder die Rückkoppelschaltung kann derart abgeglichen werden, dass der Offset Null ist.

Alternativ zur Nutzung eines phasenstarren Regelkreises in der Demodulationsschaltung können auch andere Schaltkreise zur Frequenz-Demodulation genutzt werden, beispielsweise Diskriminatorschaltungen, insbesondere Flanken-, Differenzen- oder Phasendiskriminatoren.

Die Rückkoppelschaltung kann eine Phasenschieberschaltung umfassen, die ausgebildet ist, zur Bereitstellung des Steuersignals die Phasenlage des Messsignals zu verändern. Wie bereits erläutert bildet der zeitliche Verlauf der Frequenzänderung der Oszillatorfrequenz näherungsweise eine Ortsänderung des Ankers ab. Für lineare Schwingungen, also Schwingungen bei denen die Rückstellkraft der zweiten Zeitableitung des Ortes entspricht, ist bekannt, dass im Resonanzfall der zeitliche Verlauf der Anregungskraft 90° gegenüber einer Ortskurve der Schwingung verschoben ist. Eine Phasenverschiebung um 90° kann beispielsweise durch einen Kondensator, insbesondere mit einem nachgeschalteten Operationsverstärker, also mit einer Differenziatorschaltung, erreicht werden. Die Phasenlage des Steuersignals kann angepasst werden, indem beispielsweise parallel zu dem Kondensator ein ohmscher Widerstand vorgesehen wird. Insbesondere kann ein einstellbarer ohmscher Widerstand vorgesehen sein, um eine nachträgliche Einstellung der Phasenlage zu ermöglichen. Alternativ können jedoch auch andere Phasenschieberschaltungen, beispielsweise ein Allpassfilter, genutzt werden.

Vorteilhaft umfasst die Rückkoppelschaltung eine Verstärkerschaltung, die ausgebildet ist, zur Bereitstellung des Steuersignals das Messsignal zu verstärken. Die Spule des Elektromagneten des Schwingförderers kann mit relativ hohen Spannungen, beispielsweise 110 oder 220 Volt betrieben werden und es können große Ströme fließen. Eine Signalverarbeitung, insbesondere eine Demodulation des Oszillatorsignals, durch Leistungselektronik ist relativ aufwendig und teuer. Daher ist es vorteilhaft die vorangehend beschriebene Verarbeitung des Oszillatorsignals bei relativ geringen Spannungen und Strömen, beispielsweise in einem Spannungsbereich ± 10 Volt durchzuführen. Als letzter Verarbeitungsschritt kann das Steuersignal verstärkt werden, bevor es der Spule zugeführt wird. Eine Verstärkung ist beispielsweise durch Mosfets, IGBTs oder ähnliches möglich.

Insbesondere ist es möglich, dass das Messsignal zunächst phasengeschoben und anschließend verstärkt wird, um das Steuersignal bereitzustellen. Vor oder nach der Phasenschiebung des Messsignals kann dieses zusätzlich gefiltert werden, um beispielsweise höhere harmonische Schwingungsanteile, die das Messsignal, insbesondere aufgrund des nicht linearen Zusammenhanges zwischen dem Ort des Ankers und der Frequenzänderung der Oszillatorfrequenz, umfasst, aus dem Messsignal zu entfernen.

Vorteilhaft umfasst der Schwingförderer eine Starterschaltung, die ausgebildet ist, die Spule für ein vorgegebenes Zeitintervall mit einem vorgegebenen Ansteuersignal anzusteuern. Insbesondere kann die Starterschaltung ausgebildet sein, der Spule einen Spannungs- oder Strompuls zuzuführen. Es ist möglich, dass die Starterschaltung vollständig separat von der Rückkoppelschaltung ausgebildet ist, vorteilhaft wird jedoch das Ansteuersignal der Starterschaltung über die oben beschriebene Verstärkerschaltung geführt. Das Steuersignal dient insbesondere dazu, den Schwingförderer einmalig auszulenken, so dass der Schwingförderer anschließend zunächst frei mit seiner Resonanzfrequenz schwingt. Diese freie Schwingung führt zugleich zu einer Frequenzänderung der Oszillatorfrequenz, womit, wie oben beschrieben ein Steuersignal bereitsteht, um den Schwingförderer selbstanregt zu betreiben. Alternativ wäre es auch möglich, den Schwingförderer durch eine mechanische Anregung zu starten.

Die Oszillatorschaltung kann insbesondere in Serie zueinander und parallel zu der Spule geschaltete Kondensatoren umfassen, wobei zwischen den Kondensatoren ein Abgriff für das Oszillatorsignal vorgesehen ist. Wie bereits erläutert ist es vorteilhaft, die Signalverarbeitung des Oszillatorsignals zumindest teilweise bei niedrigeren Spannungen durchzuführen, als sie an der Spule anliegen. Dies ist vorteilhaft dadurch möglich, dass im erfindungsgemäßen Schwingförderer die zwei in Serie zueinander geschalteten Kondensatoren als Spannungsteiler genutzt werden.

Es ist möglich, das Oszillatorsignal selbst auf den die Spule umfassenden Schwingkreis zurückzukoppeln, um die Selbstoszillation des Oszillators aufrechtzuerhalten. Um auch dies mit relativ niedrigen Spannungen zu ermöglichen ist es möglich, dass die Oszillatorschaltung zwei weitere in Serie zueinander und parallel zu der Spule geschaltete Kondensatoren umfasst, wobei zwischen den weiteren Kondensatoren ein Rückkoppelpunkt für das Oszillatorsignal vorgesehen ist.

Im erfindungsgemäßen Schwingförderer kann die Oszillatorfrequenz wenigstens fünfmal, insbesondere wenigstens zehnmal, so groß wie eine Resonanzfrequenz der Schwingung der Schwingschiene sein. Somit wird erreicht, dass die Frequenz des Verlaufs der Frequenzänderung der Oszillatorfrequenz deutlich geringer ist als die Oszillatorfrequenz selbst, womit eine Demodulation erleichtert sein kann. Insbesondere kann bei Nutzung einer Demodulationsschaltung mit einem phasenstarren Regelkreis ein Schleifenfilter genutzt werden, dessen Grenzfrequenz deutlich, beispielsweise um einen Faktor fünf, unterhalb der Oszillatorfrequenz liegt, womit ein glatteres Ausgangssignal bereitgestellt werden kann.

Es ist möglich, dass die Schwingschiene im erfindungsgemäßen Schwingförderer durch wenigstens eine Blattfeder mit mehreren Federlagen gelagert ist, wobei die Federlagen jeweils durch ein Abstandselement beabstandet sind und/oder wobei ein reibungsreduzierendes Element zwischen den Federlagen angeordnet ist. In Schwingförderern wird typischerweise eine Reibung zwischen den Federlagen der Blattfedern, die die Schwingschiene lagern, genutzt, um die Schwingung der Schwingschiene zu dämpfen und somit den Qualitätsfaktor der Schwingung zu reduzieren. Dies ist erforderlich, da die Schwingung eines Schwingförderers typischerweise nicht linear ist und eine stabile Schwingung nahe der Resonanzfrequenz bei fremdangeregten, nicht linearen Schwingung kaum möglich ist. Bereits eine Änderung der Temperatur des Schwingförderers oder Ähnliches würde bei fremdangeregten Schwingungen die nicht weiter bedämpft sind, zu deutlichen Amplitudenunterschieden der Schwingung führen. Der erfindungsgemäße Schwingförderer ist jedoch selbst anregt, weshalb auch ohne eine zusätzliche Bedämpfung des Schwingförderers, das heißt bei einem hohen Qualitätsfaktor der Schwingung der Schwingschiene, ein stabiler Betrieb an oder nahe der Resonanz möglich ist.

Neben dem Schwingförderer betrifft die Erfindung ein Verfahren zum Betrieb eines Schwingförderers, der eine Schwingschiene, wenigstens einen Elektromagneten mit einer Spule und einen mit der Schwingschiene gekoppelten Anker umfasst, wobei der Anker durch eine Ansteuerung der Spule bewegt wird, wodurch eine Schwingung der Schwingschiene erzeugt wird, wobei die Spule Teil einer Oszillatorschaltung ist, wobei eine Oszillatorfrequenz eines Oszillatorsignals der Oszillatorschaltung von einer durch eine Position des Ankers bezüglich der Spule beeinflussten Induktivität der Spule abhängt, wobei der Schwingförderer eine Rückkoppelschaltung umfasst, wobei die Spule durch die Rückkoppelschaltung mit einem einen zeitlichen Verlauf einer Frequenzänderung einer Oszillatorfrequenz abbildenden Steuersignal angesteuert wird.

Die Rückkoppelschaltung kann eine Demodulationsschaltung zur Frequenz-Demodulation umfassen, durch die aus dem Oszillatorsignal das Steuersignal oder ein Messsignal, in Abhängigkeit dessen das Steuersignal bereitgestellt wird, generiert wird.

Es ist möglich, dass die Rückkoppelschaltung eine Phasenschieberschaltung umfasst, durch die die Phasenlage des Messsignals zur Bereitstellung des Steuersignals verändert wird. Alternativ oder ergänzend kann die Rückkoppelschaltung eine Verstärkerschaltung umfassen, durch die das Messsignal zur Bereitstellung des Steuersignals verstärkt wird.

Der Schwingförderer kann eine Startschaltung umfassen, durch die die Spule für ein vorgegebenes Zeitintervall mit einem vorgegebenen Ansteuersignal angesteuert wird.

Des Weiteren lässt sich das erfindungsgemäße Verfahren gemäß der zum erfindungsgemäßen Schwingförderer erläuterten Merkmale weiterbilden.

Weitere Vorteile und Einzelheiten der Erfindung ergeben sich aus den folgenden Ausführungsbeispielen sowie den zugehörigen Zeichnungen. Dabei zeigen schematisch:
- Figur 1: ein Ausführungsbeispiel eines erfindungsgemäßen Schwingförderers,
- Figur 2: die Steuerelektronik des in Figur 1 gezeigten Schwingförderers,
- Figur 3: eine Detailansicht einer Blattfeder des in Figur 1 gezeigten Schwingförderers, und
- Figur 4: ein Ablaufdiagramm des erfindungsgemäßen Verfahrens.

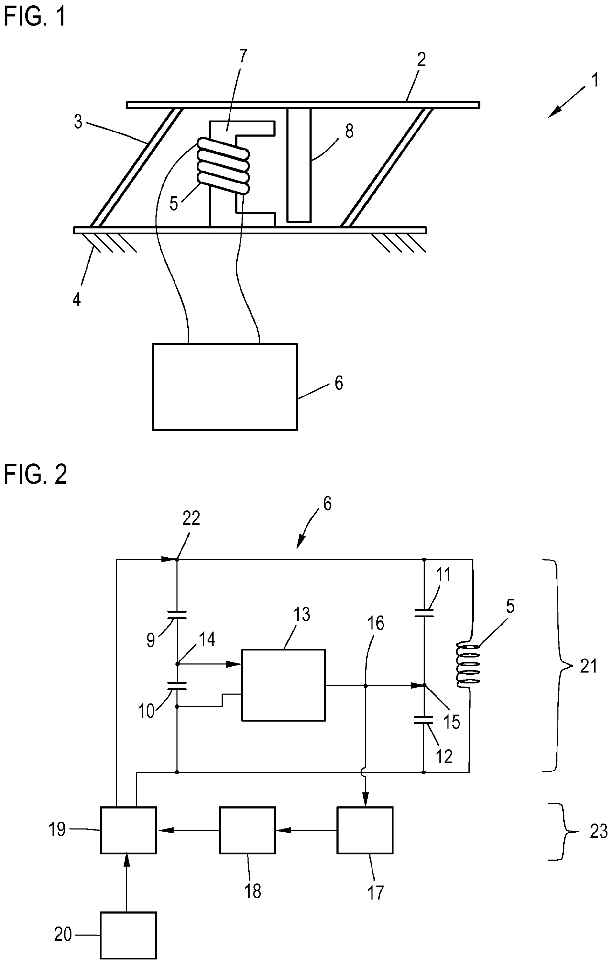

Figur 1 zeigt einen Schwingförderer 1, der eine Schwingschiene 2 umfasst, auf der Güter durch Vibrationen der Schwingschiene 2 transportierbar sind. Die Schwingschiene 2 ist über Blattfedern 3 an einer Bodenplatte 4 gelagert. Um Schwingungen der Schwingschiene 2 anzuregen, umfasst der Schwingförderer 1 die Spule 5, die durch eine Steuerelektronik 6 bestrombar ist. Wird die Spule 5 bestromt, so wird ein magnetisches Feld generiert, das durch das Joch 7 gebündelt wird, womit der mit der Schwingschiene 2 gekoppelte Anker 8 in Richtung des Jochs 7, das heißt in Richtung der Spule 5 gezogen wird.

Wird die Spule 5 durch die Steuerelektronik 6 mit einem periodischen Signal bestromt, so variiert die Anziehungskraft der Spule 5 auf den Anker 8 periodisch, womit der Anker 8 und somit die Schwingschiene 2 in Schwingung versetzt wird. Um große Schwingamplituden der Schwingschiene 2 und damit eine hohe Förderleistung bei einem geringen Energieeintrag zu erreichen, soll die Bestromung der Spule 5 mit einer Periodizität erfolgen, die einer mechanischen Resonanzfrequenz des Schwingförderers 1 entspricht.

Eine stabile Anregung an oder nahe der mechanischen Resonanzfrequenz des Schwingförderers 1 wird im Schwingförderer 1 erreicht, indem eine Selbstanregung des Schwingförderers 1 vorgesehen ist, bei der die Spule 5 durch die Steuerelektronik 6 mit einem Signal bestromt wird, das in Abhängigkeit der Schwingung der Schwingschiene 2 des Schwingförderers 1 generiert wird. Hierzu wird ausgenutzt, dass bei einer Schwingung der Schwingschiene 2 auch der Anker 8 schwingt und sich somit der Abstand zwischen dem Joch 7 und dem Anker 8 ändert. Aufgrund des sich ändernden Luftspalts zwischen Joch 7 und Anker 8 ändert sich bei einer Schwingung der Schwingschiene 2 auch die Induktivität der Spule 5. Die Steuerelektronik 6 ist ausgebildet, die Induktivitätsänderung der Spule 5 auszuwerten und in Abhängigkeit dieser Induktivitätsänderungen ein Steuersignal zur Bestromung der Spule bereitzustellen. Dies wird im Folgenden mit Bezug auf Figur 2 näher erläutert.

Figur 2 zeigt schematisch den Aufbau der Steuerelektronik 6 sowie die Verbindung der Steuerelektronik 6 zu der Spule 5. Die Spule 5 bildet gemeinsam mit den Kondensatoren 9, 10, 11, 12 einen Schwingkreis aus. Eine Resonanzfrequenz des Schwingkreises ist von der Induktivität der Spule 5 abhängig, die in Abhängigkeit der Schwingung der Schwingschiene 2 variiert. Der Schwingkreis bildet gemeinsam mit einer Treiberschaltung 13 eine Oszillatorschaltung 21 aus, wobei die Resonanzfrequenz des Schwingkreises die Oszillatorfrequenz eines Oszillatorsignals der Oszillatorschaltung 21 bestimmt.

Das Oszillatorsignal der Oszillatorschaltung 21 wird an einem Abgriff 14 zwischen den Kondensatoren 9 und 10 abgegriffen. Die Kondensatoren 9 und 10 wirken als Spannungsteiler, womit an dem Abgriff 14 geringere Maximalspannungen erreicht werden, als beim Betrieb des Schwingförderers 1 an der Spule 5 anliegen. Der Spule 5 werden relativ hohe Spannungen, beispielsweise bis zu 220 Volt, zugeführt. Die Kondensatoren 9, 10 werden so gewählt, dass die maximale Spannung an dem Abgriff 14 einen vorgegebenen Wert, beispielsweise 12 Volt, nicht übersteigt. Somit kann die Rückkopplung des Oszillatorsignals sowie die später genauer erläuterte Auswertung der Oszillatorfrequenz durch Schaltungen erfolgen, die für einen Niederspannungsbetrieb ausgebildet sind.

Um eine Oszillation im Schwingkreis aufrechtzuerhalten, verstärkt die Treiberschaltung 13 das am Abgriff 14 abgegriffene Signal, passt die Phase des Signals an und koppelt es am Punkt 15 zwischen den Kondensatoren 11 und 12 wieder in den Schwingkreis ein. Die Kondensatoren 11, 12 dienen entsprechend den Kondensatoren 9, 10 als Spannungsteiler. Durch die Rückkopplung von Abgriff 14 über die Treiberschaltung 13 zu dem Einkoppelpunkt 15 wird eine stabile Selbstoszillation der Oszillatorschaltung 21 mit einer durch den Schwingkreis, insbesondere durch die Spule 5, vorgegebenen Oszillatorfrequenz erreicht.

Die Resonanzfrequenz eines Schwingkreises und somit die Oszillatorfrequenz des Oszillatorsignals der Oszillatorschaltung 21 ist umgekehrt proportional zur Wurzel aus der Induktivität der Spule des Schwingkreises. Nähert sich der Anker 8 dem Joch 7, so wird die Induktivität der Spule 5 erhöht und die Oszillatorfrequenz sinkt dementsprechend und umgekehrt. Bei einer Schwingung der Schwingschiene variiert die Oszillatorfrequenz somit mit einer Frequenz, die der Frequenz der Schwingung der Schwingschiene entspricht. Die Änderung der Oszillatorfrequenz weist zudem eine definierte Phasenlage zu der Schwingung der Schwingschiene 2 auf. Der zeitliche Verlauf der Frequenzänderung der Oszillatorfrequenz ist somit eine geeignetes Messsignal, das als Steuersignal für die Spule 5 genutzt werden kann oder aus dem ein Steuersignal für die Spule 5 abgeleitet werden kann, um den Schwingförderer an oder nahe an der Resonanzfrequenz des Schwingförderers 1 zu betreiben.

Hierzu wird an dem Anschlusspunkt 16 das Oszillatorsignal der Oszillatorschaltung 21 ausgekoppelt und einer Demodulationsschaltung 17 zugeführt. Die Demodulationsschaltung 17 dient zur Frequenz-Demodulation des Oszillatorsignals, um einen zeitlichen Verlauf einer Frequenzänderung der Oszillatorfrequenz bereitzustellen. Die Demodulation des Oszillatorsignals erfolgt durch Nutzung eines phasenstarren Regelkreises. Das Oszillatorsignal wird einem Eingang eines Phasendetektors zugeführt, dessen anderer Eingang mit dem Ausgang eines internen, spannungsgesteuerten Oszillators des phasenstarren Regelkreises verbunden ist. Das Ausgangssignal des Phasendetektors entspricht einem Phasenunterschied zwischen dem Signal des internen Oszillators und der Oszillatorschaltung. Es sind zahlreiche Phasendetektorschaltungen bekannt, weshalb rein beispielhaft ein Sättigen beider Signale und das Zuführen der gesättigten Signale zu einem digitalen XOR-Gatter genannt sei. Das Ausgangssignal des Phasendetektors wird einem Schleifenfilter zugeführt und das derart gefilterte Signal wird zur Spannungssteuerung des internen Oszillators genutzt. Bei einem "Einrasten" des phasenstarren Regelkreises entspricht die Ausgangsspannung des Schleifenfilters, abgesehen von einem möglichen Offset, der Frequenz eines eingehenden Signals und somit der Oszillatorfrequenz der Oszillatorschaltung 21. Durch einen entsprechenden Abgleich der Demodulationsschaltung 17 bzw. durch einen Hochpassfilter wird ein Signal bereitgestellt, das einen zeitlichen Verlauf einer Frequenzänderung der Oszillatorfrequenz der Oszillatorschaltung 21 abbildet.

Dieses Signal wird als Messsignal einer Phasenschieberschaltung 18 zugeführt, die die Phase des Messsignals verändern kann. Eine Phasenschiebung ist beispielsweise durch eine Zuführung des Messsignals zu einer Parallelschaltung zwischen einem Widerstand und einem Kondensator möglich. In Abhängigkeit der relativen Größen des Widerstands und des Kondensators wird eine Phase des resultierenden Stroms bestimmt. Der Strom kann anschließend, beispielsweise durch einen Operationsverstärker, wieder in eine Spannung gewandelt werden. Die Induktivität der Spule 5 und somit die Oszillatorfrequenz der Oszillatorschaltung 21 schwankt wie erläutert in Abhängigkeit eines Abstands des Ankers 8 zum Joch 7 bzw. der Spule 5. Die Oszillatorfrequenz bildet somit, mit einer gewissen Verzerrung, einen Ort des Ankers 8 und damit der Schwingschiene 2 ab. Wäre die Schwingung des Schwingförderers 1 eine harmonische Schwingung, so wäre als Anregungssignal ein Signal zu wählen, das gegenüber einem Ort der Schwingung der Schwingschiene 2 um 90° phasenverschoben ist. Auch bei einer nicht harmonischen Schwingung des Schwingförderers 1, wie sie für den Schwingförderer 1 zu erwarten ist, ist eine Phasenverschiebung durch die Phasenverschieberschaltung 18 von ca. 90° vorteilhaft.

Vor oder nach der Phasenschiebung kann das Messsignal ergänzend durch eine nicht gezeigte Filterschaltung gefiltert werden, um höhere harmonische Schwingungen des Messsignales zu dämpfen. Insbesondere durch nicht lineare Zusammenhänge zwischen dem Abstand des Ankers 8 vom Joch 7 und der Induktivität der Spule 5 und zwischen der Oszillatorfrequenz des Oszillatorsignals der Oszillatorschaltung 21 und der Induktivität der Spule 5 kann das Messsignal deutliche harmonische Anteile umfassen, deren Rückkopplung nicht gewünscht ist.

Das Messsignal wird anschließend der Verstärkerschaltung 19 zugeführt, die das Messsignal verstärkt und ein Steuersignal bereitstellt. Durch die Verstärkerschaltung 19 erfolgt ein Wechsel in einen höheren Spannungsbereich, mit dem die Spule 5 betrieben wird, beispielsweise ein Spannungsbereich von bis zu 220 Volt. Das verstärkte Steuersignal wird an dem Punkt 22 in den Schwingkreis eingekoppelt und liegt somit an der Spule 5 an.

Die Demodulationsschaltung 17, die Phasenschieberschaltung 18 und die Verstärkerschaltung 19 bilden somit gemeinsam eine Rückkoppelschaltung 23, die die Spule mit einem einen zeitlichen Verlauf einer Frequenzänderung der Oszillatorfrequenz abbildenden Steuersignal ansteuert. Durch diese Ansteuerung wird eine Selbstanregung des Schwingförderers 1 erreicht, so dass eine einmal angeregte Schwingung des Schwingförderers 1 an oder nahe der Resonanzfrequenz stabil aufrechterhalten wird. Die Amplitude der Schwingung kann durch den Verstärkungsfaktor der Verstärkerschaltung 19 bestimmt werden. Alternativ oder ergänzend kann die Amplitude sowie zusätzlich die Schwingungsfrequenz bezüglich der Resonanzfrequenz des Schwingförderers 1 durch eine Einstellung der Stärke der Phasenänderung in der Phasenschieberschaltung 18 angepasst werden.

Erfolgt ausschließlich eine Selbstanregung des Schwingförderers 1, so muss der Schwingförderer 1 durch ein mechanisches Anregen der Schwingung gestartet werden. Um ein einfaches und zuverlässiges Starten des Schwingförderers 1 zu ermöglichen, umfasst die Steuerelektronik 6 eine Starterschaltung 20, die die Spule für ein vorgegebenes Zeitintervall mit einem vorgegebenen Ansteuersignal ansteuert. Dabei wird durch die Starterschaltung 20 die Verstärkerschaltung 19 mit genutzt. Das Ansteuersignal ist ein Stromimpuls mit einer definierten Länge. Durch den Stromimpuls wird der Anker 8 und somit die Schwingschiene 2 einmalig ausgelenkt und schwingt anschließend, bei Ende des Strompulses, mit der Resonanzfrequenz des Schwingförderers 1. Entsprechend ändert sich die Oszillatorfrequenz der Oszillatorschaltung 21 aufgrund der Schwingung und es wird durch die Demodulationsschaltung 17 ein Messsignal gewonnen, das wie erläutert weiterverarbeitet und rückgekoppelt werden kann, um die Schwingung aufrechtzuerhalten.

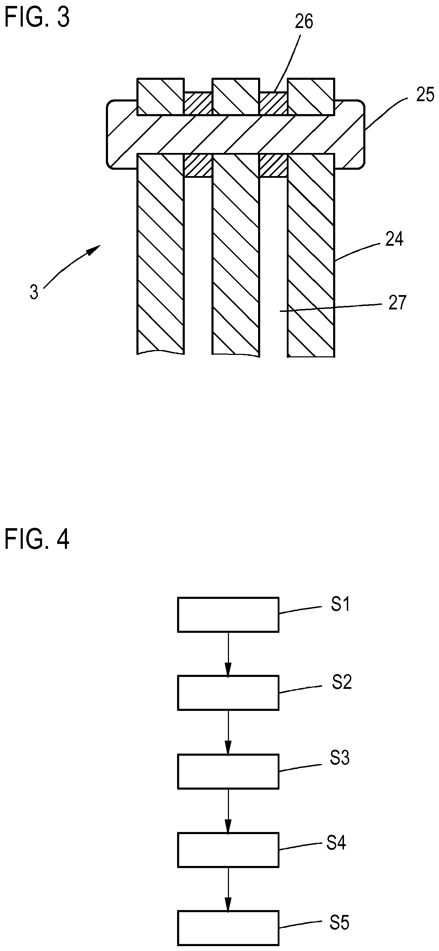

Ein wesentlicher Vorteil von selbst angeregten Schwingungen ist, dass ein stabiler Betrieb des Schwingförderers nahe bzw. an der Resonanzfrequenz möglich ist, auch wenn keine zusätzliche Dämpfung des Schwingförderers 1 vorgesehen ist. In typischen Schwingförderern werden zur zusätzlichen Dämpfung des Schwingförderers Blattfedern genutzt, deren Federlagen aneinander reiben und damit der Schwingung Energie entziehen. Solch eine zusätzliche Dämpfung ist im erfindungsgemäßen Schwingförderer 1 nicht erforderlich. Die Effizienz des erfindungsgemäßen Schwingförderers 1 kann somit weiter erhöht werden, indem eine solche zusätzliche Dämpfung vermieden wird. Daher werden im Schwingförderer gemäß Figur 1 Blattfedern 3 genutzt, die wie in Figur 3 gezeigt aufgebaut sind. Die Blattfedern 3 umfassen mehrere Federlagen 24, die über ein randseitiges Verbindungselement 25 verbunden sind. Zwischen den Federlagen sind Abstandshalter 26 angeordnet, aufgrund derer Hohlräume 27 zwischen den Federlagen 24 ausgebildet werden. Da die Federlagen 24 durch die Hohlräume 27 voneinander beabstandet sind, reiben sie nicht bzw. bei starken Biegungen weit weniger aneinander als bei üblichen Blattfedern, bei denen die Federlagen direkt aneinander anliegen. Die Schwingung des Schwingförderers 1 ist somit weniger gedämpft als bei üblichen Schwingförderern.

Figur 4 zeigt ein Verfahren zum Betrieb eines Schwingförderers 1, wobei der Schwingförderer 1 selbst angeregt betrieben wird. Der Aufbau des Schwingförderers 1 entspricht dem mit Bezug auf Figur 1 bis Figur 3 erläuterten Schwingförderer 1. In Schritt S1 wird eine Schwingung der Oszillatorschaltung 21, die die Spule 5 umfasst, an einem Abgriff 14 abgegriffen. Die Oszillatorschwingung wird einerseits auf den Schwingkreis, der durch die Spule 5 und die Kondensatoren 9, 10, 11, 12 gebildet wird, zurückgekoppelt und andererseits einer Demodulationsschaltung 17 zugeführt.

In Schritt S2 wird die Oszillatorschwingung durch die Demodulationsschaltung 17 demoduliert, womit ein Signal bereitgestellt wird, dessen Verlauf einer Frequenzänderung der Oszillatorfrequenz entspricht. Dieses Signal wird im Schritt S3 durch die Phasenschieberschaltung 18 in seiner Phase verschoben.

Das phasengeschobene Signal wird in Schritt S4 verstärkt und um ein Steuersignal bereitzustellen, das in Schritt S5 zur Ansteuerung der Spule genutzt wird.

## Patentansprüche

1. Schwingförderer, umfassend eine Schwingschiene (2), wenigstens einen Elektromagneten mit einer Spule (5) und einen mit der Schwingschiene (2) gekoppelten Anker (8), der durch eine Ansteuerung der Spule (5) zur Erzeugung einer Schwingung der Schwingschiene (2) bewegbar ist, wobei die Spule (5) Teil einer Oszillatorschaltung (21) ist, wobei eine Oszillatorfrequenz eines Oszillatorsignals der Oszillatorschaltung (21) von einer durch eine Position des Ankers (8) bezüglich der Spule (5) beeinflussten Induktivität der Spule (5) abhängt, wobei die Spule (5) ein Element eines Schwingkreises der Oszillatorschaltung (21) ist, wobei die Resonanzfrequenz des Schwingkreises die Oszillatorfrequenz des Oszillatorsignals bestimmt, **dadurch gekennzeichnet, dass** der Schwingförderer (1) eine Rückkoppelschaltung (23) umfasst, die die Spule (5) mit einem einen zeitlichen Verlauf einer Frequenzänderung der Oszillatorfrequenz abbildenden Steuersignal ansteuert.

2. Schwingförderer nach Anspruch 1, **dadurch gekennzeichnet, dass** die Rückkoppelschaltung (23) eine Demodulationsschaltung (17) zur Frequenz-Demodulation umfasst, die ausgebildet ist, aus dem Oszillatorsignal das Steuersignal oder ein Messsignal, in Abhängigkeit dessen das Steuersignal bereitgestellt wird, zu generieren.

3. Schwingförderer nach Anspruch 2, **dadurch gekennzeichnet, dass** die Demodulationsschaltung (17) einen phasenstarren Regelkreis umfasst.

4. Schwingförderer nach Anspruch 2 oder 3, durch gekennzeichnet, dass die Rückkoppelschaltung (23) eine Phasenschieberschaltung (18) umfasst, die ausgebildet ist, zur Bereitstellung des Steuersignals die Phasenlage des Messsignals zu verändern.

5. Schwingförderer nach einem der Ansprüche 2 bis 4, **dadurch gekennzeichnet, dass** die Rückkoppelschaltung (23) eine Verstärkerschaltung (19) umfasst, die ausgebildet ist, zur Bereitstellung des Steuersignals das Messsignals zu verstärken.

6. Schwingförderer nach einem der vorangehenden Ansprüche, **dadurch gekennzeichnet, dass** er eine Starterschaltung (20) umfasst, die ausgebildet ist, die Spule (5) für ein vorgegebenes Zeitintervall mit einem vorgegebenen Ansteuersignal anzusteuern.

7. Schwingförderer nach einem der vorangegangenen Ansprüche, **dadurch gekennzeichnet, dass** die Oszillatorschaltung (21) zwei in Serie zueinander und parallel zu der Spule (5) geschaltete Kondensatoren (9, 10) umfasst, wobei zwischen den Kondensatoren (9, 10) ein Abgriff (14) für das Oszillatorsignal vorgesehen ist.

8. Schwingförderer nach einem der vorangehenden Ansprüche, **dadurch gekennzeichnet, dass** die Oszillatorfrequenz wenigstens fünf mal, insbesondere wenigstens 10 mal, so groß ist wie eine Resonanzfrequenz der Schwingung der Schwingschiene (2).

9. Schwingförderer nach einem der vorangehenden Ansprüche, **dadurch gekennzeichnet, dass** die Schwingschiene durch wenigstens eine Blattfeder (3) mit mehreren Federlagen (24) gelagert ist, wobei die Federlagen (24) jeweils durch ein Abstandselement (26) beabstandet sind und/oder wobei ein reibungsreduzierendes Element zwischen den Federlagen angeordnet ist.

10. Verfahren zum Betrieb eines Schwingförderers, der eine Schwingschiene, wenigstens einen Elektromagneten mit einer Spule und einen mit der Schwingschiene gekoppelten Anker umfasst, wobei der Anker durch eine Ansteuerung der Spule bewegt wird, wodurch eine Schwingung der Schwingschiene erzeugt wird, wobei die Spule Teil einer Oszillatorschaltung ist, wobei eine Oszillatorfrequenz eines Oszillatorsignals der Oszillatorschaltung von einer durch eine Position des Ankers bezüglich der Spule beeinflussten Induktivität der Spule abhängt, wobei die Spule (5) ein Element eines Schwingkreises der Oszillatorschaltung (21) ist, wobei die Resonanzfrequenz des Schwingkreises die Oszillatorfrequenz des Oszillatorsignals bestimmt, **dadurch gekennzeichnet, dass** der Schwingförderer eine Rückkoppelschaltung umfasst, wobei die Spule durch die Rückkoppelschaltung mit einem einen zeitlichen Verlauf einer Frequenzänderung der Oszillatorfrequenz abbildenden Steuersignal angesteuert wird.

11. Verfahren nach Anspruch 10, **dadurch gekennzeichnet, dass** die Rückkoppelschaltung eine Demodulationsschaltung zur Frequenz-Demodulation umfasst, durch die aus dem Oszillatorsignal das Steuersignal oder ein Messsignal, in Abhängigkeit dessen das Steuersignal bereitgestellt wird, generiert wird.

12. Verfahren nach Anspruch 11, durch gekennzeichnet, dass die Rückkoppelschaltung eine Phasenschieberschaltung umfasst, durch die die Phasenlage des Messsignals zur Bereitstellung des Steuersignals verändert wird.

13. Verfahren nach Anspruch 11 oder 12, **dadurch gekennzeichnet, dass** die Rückkoppelschaltung eine Verstärkerschaltung umfasst, durch die das Messsignal zur Bereitstellung des Steuersignals verstärkt wird.

14. Verfahren nach einem der vorangehenden Ansprüche, **dadurch gekennzeichnet, dass** der Schwingförderer eine Starterschaltung umfasst, durch die die Spule für ein vorgegebenes Zeitintervall mit einem vorgegebenen Ansteuersignal angesteuert wird.

## Claims

1. Oscillating conveyor, comprising an oscillating rail (2), at least one electromagnet having a coil (5) and an armature (8), which is coupled to the oscillating rail (2) and which can be moved through actuation of the coil (5) in order to generate an oscillation of the oscillating rail (2), wherein the coil (5) is part of an oscillator circuit (21), wherein an oscillator frequency of an oscillator signal of the oscillator circuit (21) depends on an inductance of the coil (5), which inductance is influenced by a position of the armature (8) with respect to the coil (5), wherein the coil (5) is an element of a resonant circuit of the oscillator circuit (21), wherein the resonant frequency of the resonant circuit determines the oscillator frequency of the oscillator signal, **characterized in that** the oscillating conveyor (1) comprises a feedback circuit (23), which actuates the coil (5) using a control signal that maps a time profile of a frequency change of the oscillator frequency.

2. Oscillating conveyor according to Claim 1, **characterized in that** the feedback circuit (23) comprises a demodulation circuit (17) for frequency demodulation, which is configured to generate from the oscillator signal the control signal or a measurement signal depending on which the control signal is provided.

3. Oscillating conveyor according to Claim 2, **characterized in that** the demodulation circuit (17) comprises a phase-locked control loop.

4. Oscillating conveyor according to Claim 2 or 3, **characterized in that** the feedback circuit (23) comprises a phase shifter circuit (18), which is configured to change the phase position of the measurement signal in order to provide the control signal.

5. Oscillating conveyor according to one of Claims 2 to 4, **characterized in that** the feedback circuit (23) comprises an amplifier circuit (19), which is configured to amplify the measurement signal in order to provide the control signal.

6. Oscillating conveyor according to one of the preceding claims, **characterized in that** it comprises a starter circuit (20), which is configured to actuate the coil (5) for a prescribed time interval using a prescribed actuation signal.

7. Oscillating conveyor according to one of the preceding claims, **characterized in that** the oscillator circuit (21) comprises two capacitors (9, 10) connected in series with one another and in parallel with the coil (5), wherein a tap (14) for the oscillator signal is provided between the capacitors (9, 10).

8. Oscillating conveyor according to one of the preceding claims, **characterized in that** the oscillator frequency is at least five times, in particular at least 10 times, as high as a resonant frequency of the oscillation of the oscillating rail (2).

9. Oscillating conveyor according to one of the preceding claims, **characterized in that** the oscillating rail is mounted by at least one leaf spring (3) having a plurality of spring layers (24), wherein the spring layers (24) are each spaced apart by a spacer element (26) and/or wherein a friction-reducing element is arranged between the spring layers.

10. Method for operating an oscillating conveyor, which comprises an oscillating rail, at least one electromagnet having a coil and an armature, which is coupled to the oscillating rail, wherein the armature is moved through actuation of the coil, as a result of which an oscillation of the oscillating rail is generated, wherein the coil is part of an oscillator circuit, wherein an oscillator frequency of an oscillator signal of the oscillator circuit depends on an inductance of the coil, which inductance is influenced by a position of the armature with respect to the coil, wherein the coil (5) is an element of a resonant circuit of the oscillator circuit (21), wherein the resonant frequency of the resonant circuit determines the oscillator frequency of the oscillator signal, **characterized in that** the oscillating conveyor comprises a feedback circuit, wherein the coil is actuated by the feedback circuit using a control signal that maps a time profile of a frequency change of the oscillator frequency.

11. Method according to Claim 10, **characterized in that** the feedback circuit comprises a demodulation circuit for frequency demodulation, by way of which the control signal or a measurement signal depending on which the control signal is provided is generated from the oscillator signal.

12. Method according to Claim 11, **characterized in that** the feedback circuit comprises a phase shifter circuit, by way of which the phase position of the measurement signal is changed in order to provide the control signal.

13. Method according to Claim 11 or 12, **characterized in that** the feedback circuit comprises an amplifier circuit, by way of which the measurement signal is amplified in order to provide the control signal.

14. Method according to one of the preceding claims, **characterized in that** the oscillating conveyor comprises a starter circuit, by way of which the coil is actuated for a prescribed time interval using a prescribed actuation signal.

## Revendications

1. Convoyeur oscillant, comprenant un rail oscillant (2), au moins un électro-aimant pourvu d'une bobine (5), un induit (8) couplé avec le rail oscillant (2), qui par activation de la bobine (5) est mobile pour générer une oscillation du rail oscillant (2), la bobine (5) étant une partie d'un circuit oscillateur (21), une fréquence d'oscillation d'un signal d'oscillation du circuit oscillateur (21) dépendant d'une inductance de la bobine (5) influencée par une position de l'induit (8) par rapport à la bobine (5), la bobine (5) étant un élément d'un circuit résonant du circuit oscillateur (21), la fréquence de résonance du circuit résonant déterminant la fréquence d'oscillation du signal d'oscillation, **caractérisé en ce que** le convoyeur oscillant (1) comprend un circuit de rétroaction (23) qui active la bobine (5) avec un signal de commande qui reproduit une courbe temporelle d'une variation de fréquence de la fréquence d'oscillation.

2. Convoyeur oscillant selon la revendication 1, **caractérisé en ce que** le circuit de rétroaction (23) comprend un circuit de démodulation (17) pour la démodulation de fréquence, qui est conçu pour générer à partir du signal d'oscillation le signal de commande ou un signal de mesure, en fonction duquel le signal de commande est mis à disposition.

3. Convoyeur oscillant selon la revendication 2, **caractérisé en ce que** le circuit de démodulation (17) comprend un circuit de réglage à phase rigide.

4. Convoyeur oscillant selon la revendication 2 ou 3, **caractérisé en ce que** le circuit de rétroaction (23) comprend un circuit de déphasage (18), qui pour mettre à disposition le signal de commande, est conçu pour modifier la position de phase du signal de mesure.

5. Convoyeur oscillant selon l'une quelconque des revendications 2 à 4, **caractérisé en ce que** le circuit de rétroaction (23) comprend un circuit amplificateur (19), qui pour mettre à disposition le signal de commande est conçu pour amplifier le signal de mesure.

6. Convoyeur oscillant selon l'une quelconque des revendications précédentes, **caractérisé en ce qu'**il comprend un circuit de démarrage (20) qui est conçu pour activer la bobine (5) pour un intervalle de temps prédéfini avec un signal d'activation prédéfini.

7. Convoyeur oscillant selon l'une quelconque des revendications précédentes, **caractérisé en ce que** le circuit oscillateur (21) comprend deux condensateurs (9, 10) montés en série l'un par rapport à l'autre et à la parallèle de la bobine (5), entre les condensateurs (9, 10) étant prévue une prise (14) pour le signal d'oscillation.

8. Convoyeur oscillant selon l'une quelconque des revendications précédentes, **caractérisé en ce que** la fréquence d'oscillation est au moins 5 fois, notamment au moins 10 fois plus élevée qu'une fréquence de résonance de l'oscillation du rail oscillant (2).

9. Convoyeur oscillant selon l'une quelconque des revendications précédentes, **caractérisé en ce que** le rail oscillant est logé sur au moins un ressort à lame (3) avec plusieurs lames de ressort (24), les lames de ressort (24) étant écartées respectivement par un élément espaceur (26) et/ou un élément réducteur de friction étant placé entre les lames de ressort.

10. Procédé, destiné à faire fonctionner un convoyeur oscillant, lequel comprend un rail oscillant, au moins un électro-aimant pourvu d'une bobine et un induit couplé avec le rail oscillant, l'induit étant mis en mouvement par une activation de la bobine, ce qui a pour effet de générer une oscillation du rail oscillant, la bobine étant une partie d'un circuit oscillateur, une fréquence d'oscillation d'un signal d'oscillation du circuit oscillateur dépendant d'une inductance de la bobine influencée par une position de l'induit par rapport à la bobine, la bobine (5) étant un élément d'un circuit résonant du circuit oscillateur (21), la fréquence de résonance du circuit résonant déterminant la fréquence d'oscillation du signal d'oscillation, **caractérisé en ce que** le convoyeur oscillant comprend un circuit de rétroaction, la bobine étant activée par le circuit de rétroaction avec un signal de commande qui reproduit une courbe temporelle d'une variation de fréquence de la fréquence d'oscillation.

11. Procédé selon la revendication 10, **caractérisé en ce que** le circuit de rétroaction comprend un circuit de démodulation pour la démodulation de fréquence, par lequel est généré à partir du signal d'oscillation le signal de commande ou un signal de mesure, en fonction duquel est mis à disposition le signal de commande.

12. Procédé selon la revendication 11, **caractérisé en ce que** le circuit de rétroaction comprend un circuit de déphasage par lequel la position de phase du signal de mesure est modifiée, pour mettre à disposition le signal de commande.

13. Procédé selon la revendication 11 ou 12, **caractérisé en ce que** le circuit de rétroaction comprend un circuit amplificateur par lequel le signal de mesure est amplifié, pour mettre à disposition le signal de commande.

14. Procédé selon l'une quelconque des revendications précédentes, **caractérisé en ce que** le convoyeur oscillant comprend un circuit de démarrage par lequel la bobine est activée pour un intervalle de temps prédéfini avec un signal d'activation prédéfini.
